# EUROPEAN PATENT APPLICATION

(11) **EP 4 470 844 A1**
(43) Date of publication of application: **04.12.2024**
(21) Application number: 23791899.0
(22) Date of filing: 19.04.2023
(51) Int. Cl.: B60R 19/34, F16F 7/00, F16F 7/12

(54) **SHOCK ABSORPTION MEMBER**

(30) Priority: 19.04.2022 JP 2022068971
(71) Applicant: NIPPON STEEL CORPORATION, Chiyoda-ku Tokyo 100-8071 (JP)
(72) Inventor: MIKAZUKI, Yutaka, Tokyo 100-8071 (JP)
(74) Representative: Vossius & Partner Patentanwälte Rechtsanwälte mbB
(86) International application number: PCT/JP2023/015632
(87) International publication number: WO 2023/204251

(57) **Abstract**

An impact absorbing member includes a first cross section being a cross section perpendicular to an axial direction of the impact absorbing member, and a second cross section being a cross section defined by extension lines of a plurality of sides in the first cross section, in which the first cross section includes a shared vertex that is shared by the second cross section, and a recessed groove that is positioned to correspond to a vertex of the second cross section, the recessed groove has a first inflection point being a vertex whose interior angle is greater than 180°, and a second inflection point being a vertex whose interior angle is less than 180°, the first inflection point and the second inflection point are alternately arranged along a circumferential direction of the first cross section in at least a part of region of the first cross section, an interior angle of at least one vertex of the first cross section excluding the first inflection point and the second inflection point is 100° or more, and the first cross section does not have a partition wall portion in the inside thereof.

## Description

### TECHNICAL FIELD

The present disclosure relates to an impact absorbing member.

### BACKGROUND ART

There is known an impact absorbing member that absorbs an impact by being crushed in an axial direction. When a load is input in such an impact absorbing member in its axial direction, buckling proceeds continuously in a bellows shape in the member, to thereby absorb the impact. The impact absorbing member is arranged at a tip of a side member (a front side member or a rear side member) as a crash box in a vehicle body of an automobile, for example.

For example, Patent Document 1 discloses an impact absorbing member having a groove portion that is recessed inward of a contour, in a part of region of at least one side of a basic cross section, at a position that is not an end point of the side. Further, Patent Document 2 discloses a die-cast aluminum alloy crash can in which a material modified portion is provided on a peripheral wall of a cylindrical portion so as to partially reduce strength against compression in a vehicle longitudinal direction. Further, Patent Document 3 discloses an impact absorbing member in which corner wall portions for forming a second closed cross section portion with a rectangular cross section extending in a longitudinal direction, in cooperation with a part of a lateral wall portion and a part of a vertical wall portion, are each provided in four corner portions of a first closed cross section portion, the corner wall portions in the four corner portions being separated from each other. Further, Patent Document 4 discloses a collision energy absorbing structure in which a cross-sectional shape of a cross section perpendicular to an axial direction is a polygonal shape that is symmetrical with respect to a center of the cross section, and is not symmetrical with respect to a center line of the cross section. In this energy absorbing structure, when an outside contour of the above-described cross section is set to a quadrangle, an aspect ratio is less than 1.5, and a ratio of lengths of adjacent sides among sides of the polygon constituting the cross section is 2.3 or less.

Further, Patent Document 5 discloses an impact absorbing member in which a region being a part of at least one side of a basic cross section and excluding end points of the side is formed by being bent so as to form a groove portion that is recessed toward the inside of a tubular body. Further, Patent Document 6 discloses an impact absorbing member including a tubular main body, and a pair of attachment plates that are welded to be fixed to both end portions, respectively, in an axial direction of the main body. Besides, Patent Document 7 discloses an impact absorbing member that absorbs an impact by being crushed in an axial direction, the impact absorbing member having a cylindrical shape extending along the axial direction, in which when a cross section perpendicular to the axial direction is set to a first cross section, and a cross section defined by extension lines of a plurality of sides in the first cross section is set to a second cross section, the second cross section is a polygon, the first cross section includes a shared vertex that is shared by the second cross section, and a recessed groove that is positioned to correspond to a vertex of the second cross section, and an interior angle of at least one vertex of the first cross section is 100° or more.

### PRIOR ART DOCUMENT

### PATENT DOCUMENT

Patent Document 1: International Publication Pamphlet No. WO 2005-010398
Patent Document 2: Japanese Laid-open Patent Publication No. 2012-166641
Patent Document 3: Japanese Laid-open Patent Publication No. 2017-141860
Patent Document 4: Japanese Laid-open Patent Publication No. 2011-218935
Patent Document 5: Japanese Laid-open Patent Publication No. 2006-207724
Patent Document 6: International Publication Pamphlet No. WO 2007-029362
Patent Document 7: International Publication Pamphlet No. WO 2022-085575

### SUMMARY OF THE INVENTION

### PROBLEMS TO BE SOLVED BY THE INVENTION

An impact absorbing member is required to have both impact absorbing performance and lightness in weight. The present disclosure was made in view of the above-described circumstances, and a main object thereof is to provide an impact absorbing member with good balance between the impact absorbing performance and the lightness in weight.

### MEANS FOR SOLVING THE PROBLEMS

An aspect of the present disclosure is characterized in that it is an impact absorbing member that absorbs an impact by being crushed in an axial direction, the impact absorbing member having a cylindrical shape including a plurality of planar portions, extending along the axial direction, in which when a cross section perpendicular to the axial direction of the impact absorbing member is set to a first cross section, and a cross section defined by extension lines of a plurality of sides in the first cross section is set to a second cross section, the second cross section is a polygon having no interior angle of 180° or more, the first cross section includes a shared vertex that is shared by the second cross section, and a recessed groove that is positioned to correspond to a vertex of the second cross section, the recessed groove has a first inflection point being a vertex whose interior angle is greater than 180°, and a second inflection point being a vertex whose interior angle is less than 180°, a plurality of the first inflection points are provided, the first inflection point and the second inflection point are alternately arranged along a circumferential direction of the first cross section in at least a part of region of the first cross section, an interior angle of at least one vertex of the first cross section excluding the first inflection point and the second inflection point is 100° or more, and the first cross section does not have a partition wall portion in the inside thereof.

According to the present disclosure, the first cross section includes the shared vertex with the second cross section and the recessed groove, and the recessed groove has the plurality of first inflection points and the second inflection point, so that it is possible to obtain an impact absorbing member with good balance between impact absorbing performance and lightness in weight (impact absorbing performance per weight).

In the above disclosure, it is also possible that in at least a part of region of the recessed groove in the first cross section, the first inflection point and the second inflection point are alternately arranged along the circumferential direction of the first cross section.

In the above disclosure, it is also possible that a width-height ratio of the first cross section is 0.70 or less.

In the above disclosure, it is also possible that the first cross section includes a plurality of the shared vertices and the recessed grooves, and at least two of the recessed grooves are arranged at positions corresponding to respective vertices on the same diagonal line in the second cross section. The diagonal line is the longest diagonal line out of a plurality of diagonal lines extending from one vertex.

In the above disclosure, it is also possible that the first cross section includes a plurality of the shared vertices and the recessed grooves, and the shared vertex and the recessed groove are alternately arranged along the circumferential direction of the first cross section.

In the above disclosure, it is also possible that, in the first cross section, each interior angle of less than 180° is 75° or more and 135° or less, and each angle of an exterior angle of the first inflection point is 75° or more and 135° or less.

### EFFECT OF THE INVENTION

The impact absorbing member in the present disclosure brings about an effect of providing a good balance between the impact absorbing performance and the lightness in weight.

### BRIEF DESCRIPTION OF THE DRAWINGS

FIG. 1 is a schematic perspective view illustrating a reference example of an impact absorbing member in the present disclosure.
FIG. 2 is a schematic sectional view illustrating the reference example of the impact absorbing member in the present disclosure.
FIGS. 3(a) to 3(d) are schematic sectional views each exemplifying a conventional impact absorbing member.
FIG. 4 is a schematic sectional view illustrating the reference example of the impact absorbing member in the present disclosure.
FIG. 5 is a schematic sectional view illustrating the reference example of the impact absorbing member in the present disclosure.
FIGS. 6(a) to 6(d) are schematic sectional views each illustrating a reference example of the impact absorbing member in the present disclosure.
FIG. 7 is a schematic sectional view exemplifying an impact absorbing member in the present disclosure.
FIGS. 8(a) to 8(c) are schematic sectional views each exemplifying an impact absorbing member in the present disclosure.
FIGS. 9(a) to 9(c) are schematic sectional views exemplifying impact absorbing members in a reference example 1, and comparative examples 1 and 2, respectively.
FIG. 10 is a result of FEM analysis in the reference example 1, and the comparative examples 1 and 2.
FIG. 11 is a result of FEM analysis in a reference example 2.
FIG. 12 is a result of FEM analysis in a reference example 3.
FIGS. 13(a) and 13(b) are schematic front views exemplifying buckling deformation modes.
FIGS. 14(a) to 14(c) are schematic sectional views exemplifying impact absorbing members in reference examples 4 and 5, and a comparative example 3, respectively.
FIG. 15 is a result of FEM analysis in the reference examples 4 and 5, and the comparative example 3.
FIGS. 16(a) to 16(c) are schematic sectional views exemplifying impact absorbing members in an example 1, a comparative example 4, and a reference example 6, respectively.
FIGS. 17(a) to 17(c) are schematic sectional views exemplifying impact absorbing members in examples 1 to 3, respectively.
FIGS. 18(a) to 18(c) are perspective views illustrating deformation behavior of the impact absorbing members in the examples 1 to 3, respectively.
FIGS. 19(a) and 19(b) are schematic sectional views exemplifying impact absorbing members in the example 1 and a comparative example 5, respectively.

### EMBODIMENTS FOR CARRYING OUT INVENTION

Hereinafter, impact absorbing members in the present disclosure will be described in detail. In respective drawings to be shown below, a size and a shape of each part are appropriately exaggerated for easier understanding. Further, in the respective drawings, hatching or codes are sometimes omitted for the sake of convenience.

Further, when expressing an aspect in which, with respect to a certain member, another member is arranged, an aspect of a case described that the other member is arranged "on" or "under" the certain member, includes both an aspect in which the other member is arranged directly on or directly under the certain member so as to be brought into contact with the certain member, and an aspect in which the other member is arranged above or below the certain member with a different member provided therebetween.

### (Regarding explanation of embodiments)

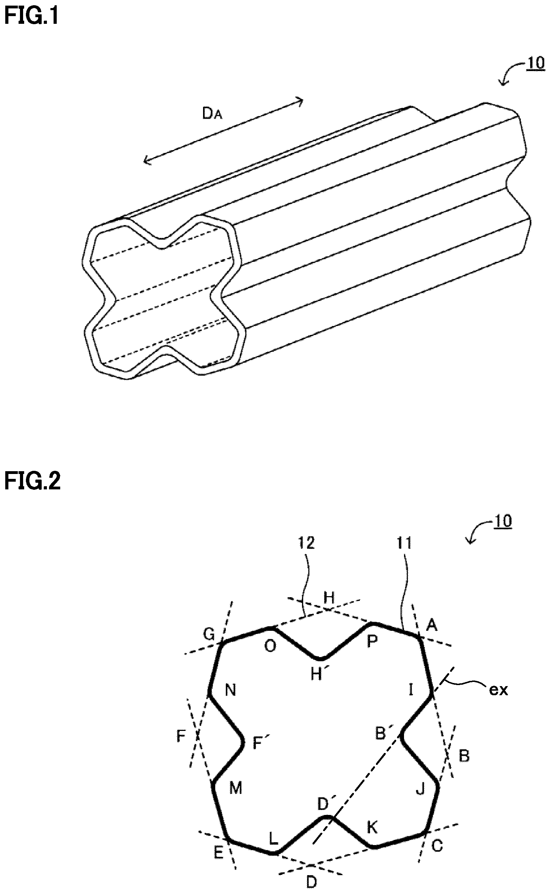

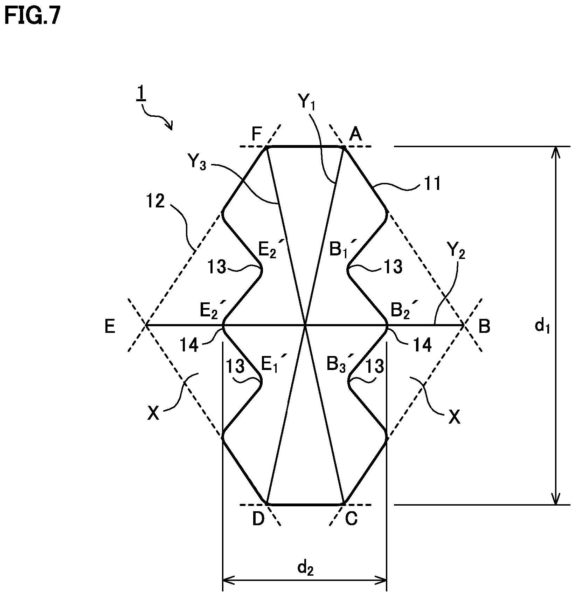

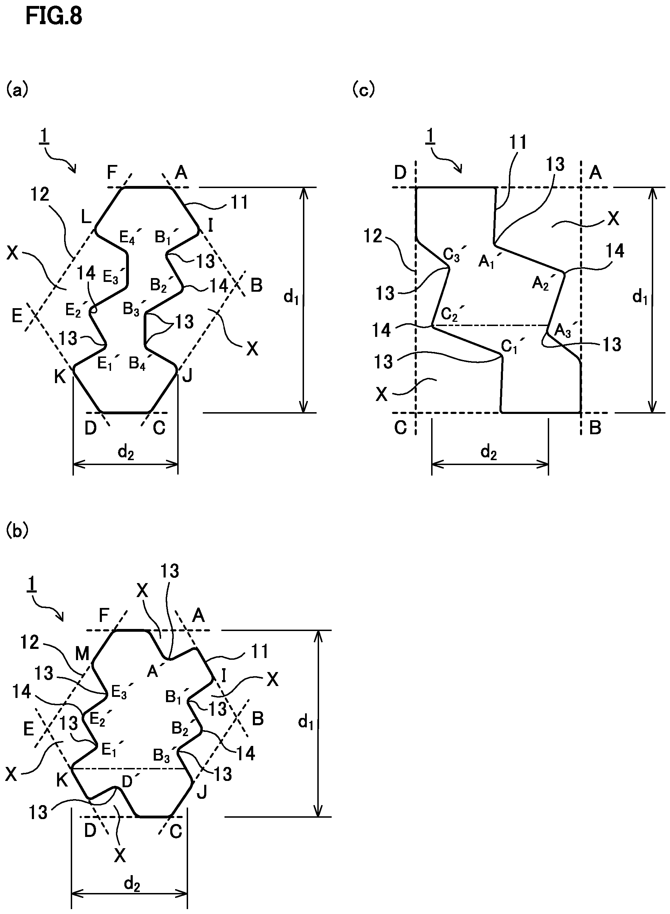

An impact absorbing member in the present disclosure is mainly characterized in that it is a cylindrical-shaped member including a first cross section, a second cross section, and a recessed groove, in which the recessed groove has "a plurality of" inflection points. In order to explain this characteristic, in the present embodiment, an impact absorbing member in a case where a recessed groove has "one" inflection point will be first exemplified for the convenience of explanation, to thereby explain definitions of the first cross section, the second cross section, the recessed groove, and the like, and advantages with respect to the prior art, and so on. The drawings to be referred to by this explanation are mainly FIG. 1 to FIGS. 6. After that explanation, an impact absorbing member in a case where the recessed groove has "a plurality of" inflection points will be exemplified, to thereby explain the main characteristic of the impact absorbing member in the present disclosure. The drawings to be referred to by this explanation are mainly FIG. 7 and FIGS. 8.

### (Outline of first cross section, second cross section, and recessed groove)

FIG. 1 is a schematic perspective view illustrating a reference example of an impact absorbing member in the present disclosure. Further, FIG. 2 is a schematic sectional view illustrating the reference example of the impact absorbing member in the present disclosure, and concretely, it corresponds to a sectional view illustrating a cut surface perpendicular to an axial direction D_{A} of an impact absorbing member 10 in FIG. 1.

The impact absorbing member 10 illustrated in FIG. 1 absorbs an impact by being crushed in the axial direction D_{A}. The impact absorbing member 10 has a cylindrical shape extending along the axial direction D_{A}. Further, the impact absorbing member 10 has a plurality of planar portions extending along the axial direction D_{A}.

As illustrated in FIG. 2, in the present disclosure, a cross section perpendicular to the axial direction D_{A} of the impact absorbing member 10 is set to a first cross section 11. In FIG. 2, the first cross section 11 is a cross section described by a thick solid line. As described above, since the impact absorbing member 10 has the plurality of planar portions, a shape of the first cross section 11 is a polygonal shape formed of a plurality of vertices and sides connecting the respective vertices.

On the other hand, in the present disclosure, a cross section defined by extension lines of a plurality of sides (line segments connecting vertices) in the first cross section 11 is set to a second cross section 12. In FIG. 2, the second cross section 12 is a cross section described by a dotted line.

As illustrated in FIG. 2, the second cross section 12 is a polygon. Concretely, the second cross section 12 is an octagon having eight vertices of a vertex A to a vertex H, along a circumferential direction. The first cross section 11 includes shared vertices that are shared by the second cross section 12. In FIG. 2, the first cross section 11 and the second cross section 12 share the vertices A, C, E, and G, and these vertices correspond to the shared vertices. On the other hand, the first cross section 11 and the second cross section 12 do not share the vertices B, D, F, and H. The first cross section 11 includes recessed grooves so as to stride over the vertices B, D, F, and H. These recessed grooves have vertices B' D', F', and H' at bottoms, respectively.

In the impact absorbing member 10 in the present disclosure, the first cross section 11 includes the shared vertices, and the recessed grooves each positioned to correspond to the vertex of the second cross section 12, so that the balance between impact absorbing performance and lightness in weight (impact absorbing performance per weight) is improved.

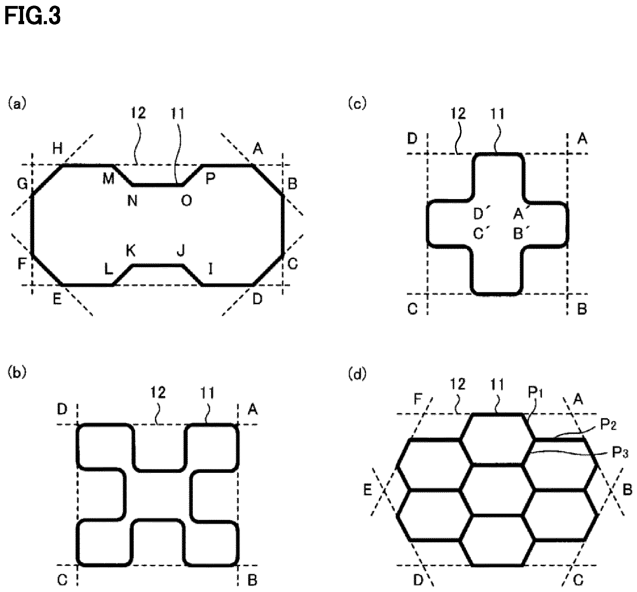

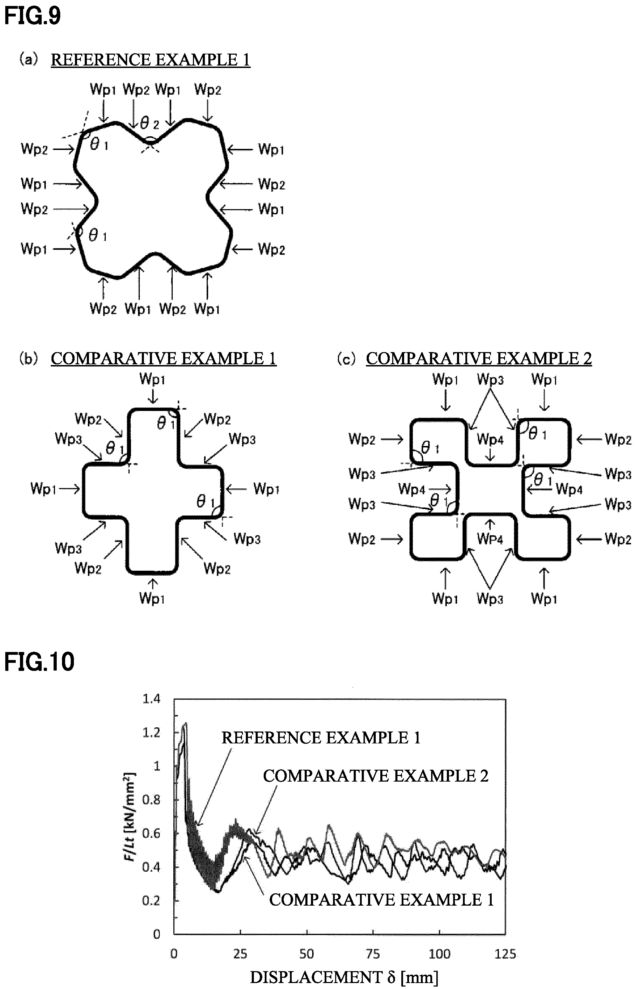

Differences with respect to conventional impact absorbing members will be described by using FIGS. 3. FIG. 3(a) illustrates a cross section corresponding to FIG. 3 of Patent Document 1. A first cross section 11 illustrated in FIG. 3(a) has recessed grooves at a part of a side HA and a part of a side DE, respectively, in a second cross section 12. For example, the side HA is divided into a side HM and a side PA by the recessed groove, and these sides are on the same straight line. When considering an axial direction, a planar portion including the side HM and a planar portion including the side PA are on the same plane. With respect to such an impact absorbing member, there is room for improvement regarding the balance between the impact absorbing performance and the lightness in weight, as in comparative examples to be studied in FIGS. 9 and FIG. 10 to be described later.

Further, FIG. 3(b) is a cross section studied in a comparative example 2 to be described later, in which two sides divided by a recessed groove are on the same straight line, in a similar manner to FIG. 3(a), and thus there is room for improvement regarding the balance between the impact absorbing performance and the lightness in weight, as illustrated in FIG. 10 to be described later.

On the contrary, the first cross section in the present disclosure includes the recessed groove positioned so as to correspond to the vertex of the second cross section. Two sides divided by such a recessed groove are not on the same straight line, unlike FIGS. 3(a) and 3(b). For example, in FIG. 2, a side AB and a side BC are divided into a side AI and a side JC by the recessed groove having, at the bottom, the vertex B' corresponding to the vertex B, and these sides are not on the same straight line. Further, when considering the axial direction, a planar portion including the side AI and a planar portion including the side JC are not on the same plane. Accordingly, it is possible to improve the balance between the impact absorbing performance and the lightness in weight.

FIG. 3(c) is a cross section corresponding to FIG. 3 of Patent Document 2, and is also a cross section studied in a comparative example 1 to be described later. A first cross section 11 illustrated in FIG. 3(c) has recessed grooves at all vertices (vertices A to D), respectively, in a second cross section 12. Specifically, the first cross section 11 illustrated in FIG. 3(c) does not have a shared vertex that is shared by the second cross section 12. The shared vertex becomes a major resistance portion when a bending stress occurs on the impact absorbing member in the axial direction. For this reason, when the first cross section does not have the shared vertex, the resistance with respect to the bending stress is weak. On the contrary, since the first cross section in the present disclosure has the shared vertex, the resistance with respect to the bending stress is high, which is advantageous.

Further, FIG. 3(d) illustrates a cross section having a honeycomb structure, in which a first cross section 11 does not have a shared vertex that is shared by a second cross section 12, in a similar manner to FIG. 3(c). Accordingly, the resistance with respect to the bending stress is low.

Further, the first cross section 11 illustrated in FIG. 3(d) has a partition wall portion in the inside thereof. In such an impact absorbing member, a strong joining structure is formed by planar portions P₁ and P₂ configuring an outer edge of the first cross section 11, and a planar portion P₃ configuring the partition wall portion. However, in the impact absorbing member having the partition wall portion in the inside of the first cross section 11, when crushing in the axial direction occurs, a high stress is applied to the joining structure, and the stress may cause breakage of the joining structure. Accordingly, from a viewpoint of improving the impact absorbing performance by facilitating the occurrence of buckling in a bellows shape, complicated measures have to be taken for avoiding the above-described breakage of the joining structure. On the contrary, according to the impact absorbing member in the present disclosure, since the first cross section 11 does not have the partition wall portion in the inside thereof, there is provided an advantageous point that the balance between the impact absorbing performance and the lightness in weight can be improved without taking the measures against the breakage of the joining structure described above.

Further, when manufacturing an impact absorbing member with a honeycomb structure by using a metal sheet such as a steel sheet having tensile strength of 780 MPa or more, for example, it is difficult to perform forming such as extrusion, and thus there is a need to complete the honeycomb structure by mutually joining a plurality of metal sheets. However, a load is imposed on an assembly work of the metal sheets when building the partition wall portion in the inside of the first cross section 11, and it is also not easy to automate the assembly work. Therefore, when considering mass production of the impact absorbing member, it is difficult to apply the metal sheet having the tensile strength of 780 Pa or more to the impact absorbing member with the honeycomb structure. On the contrary, the impact absorbing member in the present disclosure has the structure in which the first cross section 11 does not have the partition wall portion in the inside thereof, so that it is easy to realize the mass production of the impact absorbing member even when the metal sheet having the tensile strength of 780 MPa or more is used. In addition, there is provided an advantageous point that the balance between the impact absorbing performance and the lightness in weight can be improved at a higher level, since it is possible to apply the high-strength metal sheet to the impact absorbing member. Specifically, the impact absorbing member in the present disclosure has the advantageous point that cannot be obtained by the impact absorbing member with the honeycomb structure.

### (Detailed explanation of first cross section, second cross section, and recessed groove)

Hereinafter, a first cross section 11, a second cross section 12, and a recessed groove X of the impact absorbing member in the present disclosure will be explained in more detail.

Note that an angle made by two adjacent sides of the first cross section 11, includes two angles of an angle made by two adjacent sides on the inner side of the first cross section 11, and an angle made by two adjacent sides on the outer side of the first cross section 11. An "interior angle of a vertex" in the present disclosure is an angle made by two adjacent sides on the inner side of the first cross section 11, and is an angle corresponding to 360° - (exterior angle of vertex). On the other hand, an "exterior angle of a vertex" in the present disclosure is an angle made by two adjacent sides on the outer side of the first cross section 11, and is an angle corresponding to 360° - (interior angle of vertex).

Further, although the "vertex" in the present disclosure indicates an intersection point of two sides, when there exists an arc portion formed at a constant curvature between end points of two sides, and the end points of the two sides are connected via the arc portion, the arc portion also corresponds to the "vertex". The arc portion is a bent portion formed when performing bending on a metal sheet, for example, and a curvature radius of the arc portion with the constant curvature is 12 mm or less, for example.

On the other hand, even in a case where end points of two sides are connected via an arc portion, for example, if the arc portion is formed of a plurality of continued arcs with different curvatures, the arc portion does not correspond to the "vertex" since the two sides are not connected via the arc portion with the constant curvature.

In the present disclosure, the cross section perpendicular to the axial direction of the impact absorbing member is defined as the first cross section. As illustrated in FIG. 1 and FIG. 2, the first cross section 11 is a cross section obtained when cutting the impact absorbing member 10 having the cylindrical shape, at a plane in which the axial direction D_{A} is set to a normal direction, and the first cross section 11 is normally a closed cross section defined by an outer edge of the cylindrical shape.

Meanwhile, in the present disclosure, the cross section defined by the extension lines of the plurality of sides in the first cross section, is defined as the second cross section. Concretely, as illustrated in FIG. 2, the cross section defined by the extension lines (dotted line illustrated in FIG. 2) of the plurality of sides (the side AI, the side JC, a side CK, a side LE, a side EM, a side NG, a side GO, and a side PA) in the first cross section 11, is defined as the second cross section 12. The number of the plurality of sides is set to the maximum number capable of configuring the second cross section 12. For example, in FIG. 2, if the side AI, the side CK, the side EM, and the side GO are employed as the plurality of sides that configure the second cross section 12, a large quadrangle is defined by extension lines of those sides, but the quadrangle does not correspond to the second cross section 12 (because the other sides such as the side JC are not taken into consideration).

Further, as the "extension lines of the plurality of sides in the first cross section" used in the definition of the second cross section, an extension line that does not intersect the other side configuring the first cross section is employed. In the example illustrated in FIG. 2, as an extension line of the side configuring the first cross section 11, there also exists, other than the extension lines indicated by the dotted line in FIG. 2, an extension line ex of a side IB' indicated by a two-dot chain line in FIG. 2, for example. The extension line ex of the side IB' intersects the other side KD' configuring the first cross section 11, so that the extension line ex is not employed as the "extension lines of the plurality of sides in the first cross section" used in the definition of the second cross section. In like manner, each of extension lines of a side JB', the side KD', a side LD', a side MF', a side NF', a side OH', and a side PH' intersects the other side configuring the first cross section 11, so that it is not employed as the extension line used in the definition of the second cross section 12.

In other words, the second cross section 12 is defined so as not to have an interior angle of 180° or more. For example, when a side IB' and a side B'J are employed as the plurality of sides that configure the second cross section 12, a figure having a vertex B' may be defined, but the figure does not correspond to the second cross section 12 (because an interior angle of the vertex B' is 180° or more). The second cross section 12 is normally defined so as to surround an outer edge of the first cross section 11.

In the present disclosure, the second cross section is a polygon. The second cross section may be a 2n-sided polygon (n is an integer of 2 or more) such as a quadrangle, and it may also be a 2n+1-sided polygon (n is an integer of 1 or more) such as a triangle. The second cross section of the 2n-sided polygon has a high symmetric property as a figure, and thus it is possible to obtain an impact absorbing member with uniform resistance with respect to a bending stress in the axial direction. Such an impact absorbing member is useful as a member required to be resistant to an impact (bending stress) from an arbitrary direction, for example. When compared to the second cross section of the 2n-sided polygon, the second cross section of the 2n+1-sided polygon has a low symmetric property as a figure, and thus there is obtained an impact absorbing member whose resistance with respect to the bending stress is nonuniform in the axial direction. Such an impact absorbing member is useful as a member required to be resistant to an impact (bending stress) from a specific direction, for example, n is not limited in particular, and it may be 2 or more, 3 or more, or 4 or more. On the other hand, n is 10 or less, for example.

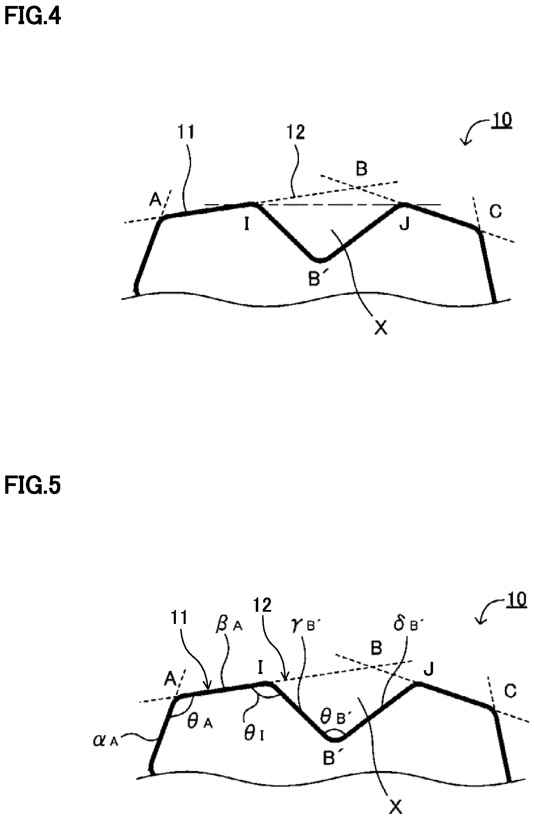

FIG. 4 is a schematic sectional view illustrating the reference example of the impact absorbing member in the present disclosure, and illustrates a part of the first cross section 11 and the second cross section 12 in FIG. 2. In FIG. 4, the first cross section 11 includes shared vertices (vertices A and C) that are shared by the second cross section 12. Meanwhile, the first cross section 11 includes a recessed groove X positioned so as to correspond to a vertex (vertex B) of the second cross section 12. Whether the first cross section 11 includes the recessed groove X, is judged by the following procedure.

First, out of vertices of the second cross section, a vertex that is not shared by the first cross section (non-shared vertex) is specified. In FIG. 4, a vertex B corresponds to the non-shared vertex. Next, a boundary point that exists at the midpoint of a side connecting the non-shared vertex and the shared vertex, and that is a boundary deciding whether or not the first cross section and the second cross section share the side (a boundary vertex of the first cross section) is specified. In FIG. 4, each of a vertex I of the first cross section that exists at the midpoint of a side BA, and a vertex J of the first cross section that exists at the midpoint of a side BC, corresponds to the boundary vertex. At last, a straight line connecting the two boundary vertices and striding over the non-shared vertex is supposed, and when the first cross section has an inflection point (inflection vertex) on the side being the inner side of an outer edge of the second cross section (on the opposite side of the non-shared vertex) relative to the straight line, it is judged that the first cross section includes the recessed groove. In FIG. 4, a straight line IJ connecting the vertex I and the vertex J being the boundary vertices is supposed, and since the first cross section 11 has an inflection point (the vertex B') on the side being the inner side of an outer edge of the second cross section 12 (on the opposite side of the vertex B being the non-shared vertex) relative to the straight line IJ, it is judged that the first cross section 11 includes the recessed groove X. Note that in this DESCRIPTION, the inflection point whose interior angle is greater than 180° (later-described first inflection point 13) is sometimes referred to as a bottom vertex of the recessed groove X.

The first cross section may include only one shared vertex described above, or it may also include a plurality of the shared vertices. In a similar manner, the first cross section may include only one recessed groove described above, or it may also include a plurality of the recessed grooves. The number of the shared vertex and the recessed groove can be combined in an arbitrary manner. Further, as illustrated in FIG. 2, the shared vertex and the recessed groove are preferably arranged alternately along a circumferential direction of the first cross section 11. This is for making buckling proceed stably. When the second cross section 12 is a 2n-sided polygon (n is an integer of 2 or more, and in FIG. 2, the section is an octagon), the shared vertices and the recessed grooves are arranged not in a manner that the shared vertices or the recessed grooves are continuously arranged along the circumferential direction, but in a manner that the shared vertex and the recessed groove are alternately arranged along the circumferential direction. Further, although not illustrated, when the second cross section 12 is a 2n+1-sided polygon (n is an integer of 1 or more), there is generated a continuous portion in which the shared vertices or the recessed grooves are continuously arranged along the circumferential direction, and except for the continuous portion, the shared vertex and the recessed groove are alternately arranged.

FIG. 5 is a schematic sectional view illustrating the reference example of the impact absorbing member in the present disclosure, and illustrates a part of the first cross section 11 and the second cross section 12 in FIG. 2. In the impact absorbing member 10, an interior angle of at least one vertex out of interior angles of the vertices of the first cross section 11 except for the inflection point (for example, the vertex B') of the recessed groove X is 100° or more. As will be described later in examples, if the interior angle of at least one vertex of the first cross section 11 except for the inflection point of the recessed groove X is 100° or more, the resistance force with respect to the bending stress is further improved, when compared to a case where the interior angle of the vertex is 90° or less. The interior angle of at least one vertex of the first cross section 11 except for the inflection point of the recessed groove X may be 105° or more, and it may also be 110° or more.

As long as the interior angle of at least one vertex of the first cross section 11 except for the inflection point of the recessed groove X is 100° or more, angles of interior angles of the other vertices are not limited in particular. For example, the angles of the interior angles of the other vertices are 75° or more, for example, they may be 90° or more, and they may also be 105° or more.

When the axial direction is taken into consideration, the interior angle in the first cross section corresponds to a ridge line angle of adjacent planar portions. When the ridge line angle of the adjacent planar portions is equal to or more than a proper angle determined according to a shape, a sheet thickness, and the like of the impact absorbing member, a phase shift is likely to occur in out-of-plane deformations of the adjacent planar portions at a time of crushing in the axial direction. Accordingly, the out-of-plane deformations of the mutual planar portions with different phases interfere with each other, and in accordance with this, the resistance of each planar portion is increased, resulting in that the balance between the impact absorbing performance and the lightness in weight is likely to be improved.

An angle of an interior angle of less than 180° (for example, an interior angle θ_{A} and an interior angle θ_{I} illustrated in FIG. 5) in the first cross section is 135° or less, for example, and is preferably 130° or less. The interior angle in the first cross section corresponds to a ridge line angle of adjacent planar portions of the impact absorbing member 10, and if the angle of the interior angle (the ridge line angle of the adjacent planar portions) is within the above-described range, the stability of buckling can be improved. Further, all interior angles of less than 180° in the first cross section are preferably within the above-described range.

An angle of an exterior angle of the bottom vertex (later-described first inflection point 13) in the recessed groove (for example, an exterior angle θ_{B'} illustrated in FIG. 5) is not limited in particular. The angle of the exterior angle of the bottom vertex is 75° or more, for example, it may be 90° or more, and it may also be 105° or more. The angle of the bottom vertex also corresponds to a ridge line angle of adjacent planar portions, in a similar manner to the interior angle in the first cross section. For this reason, when the ridge line angle of the adjacent planar portions is equal to or more than a proper angle determined according to a shape, a sheet thickness, and the like of the impact absorbing member, out-of-plane deformations with different phases interfere with each other, resulting in that the resistance of the planar portions is likely to be increased.

On the other hand, the angle of the exterior angle of the bottom vertex (later-described first inflection point 13) is 135° or less, for example, and it may be 130° or less. This makes it possible to increase the stability of buckling. Further, angles of all bottom vertices in the recessed grooves are preferably within the above-described range.

The first cross section of the impact absorbing member in the present disclosure does not have a partition wall portion in the inside thereof. As explained by using FIG. 3(d) described above, when the partition wall portion is provided, a strong joining structure is formed, but when crushing in the axial direction occurs, a high stress is applied to the joining structure. Accordingly, complicated measures have to be taken in order to avoid breakage of the joining structure caused by the stress.

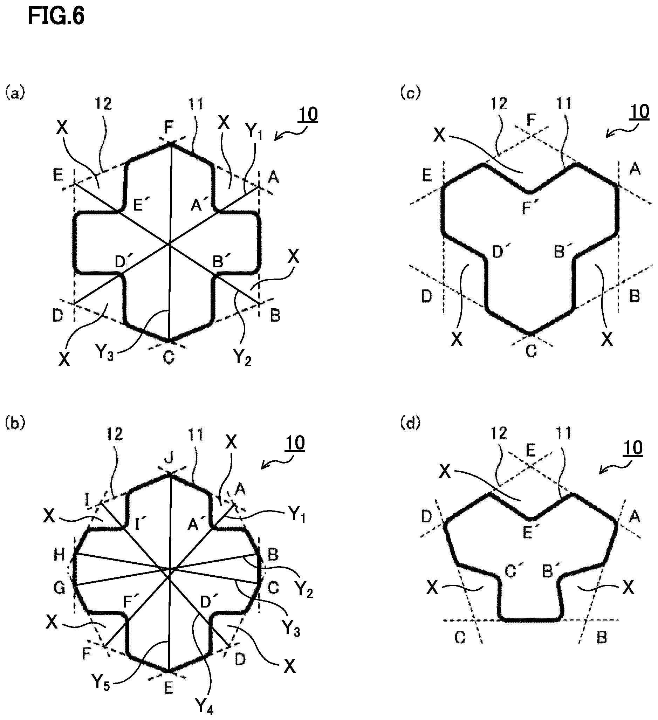

FIGS. 6 are schematic sectional views each illustrating a reference example of the impact absorbing member in the present disclosure. In FIG. 6(a), a second cross section 12 is a hexagon having six vertices from a vertex A to a vertex F along a circumferential direction. A first cross section 11 and the second cross section 12 share the vertices C and F, and these vertices correspond to shared vertices. On the other hand, the first cross section 11 and the second cross section 12 do not share the vertices A, B, D, and E. The first cross section 11 includes four recessed grooves X so as to stride over the respective vertices A, B, D, and E. These recessed grooves X have vertices A', B', D', and E' at their bottoms, respectively. As illustrated in FIG. 6(a), the number of the shared vertices may be smaller than the number of the recessed grooves X.

Note that at least two recessed grooves X are preferably arranged at positions corresponding to respective vertices positioned on the same diagonal line in the second cross section 12. The same diagonal line in this case is the longest diagonal line out of a plurality of diagonal lines extending from one vertex (referred to as the "longest diagonal line", hereinafter). With the use of such an impact absorbing member, a symmetric property of arrangement of the shared vertices and the recessed grooves is enhanced, which improves the stability of buckling. In the example illustrated in FIG. 6(a), as the longest diagonal lines, there are three longest diagonal lines of a diagonal line Y₁ extending from the vertex A, a diagonal line Y₂ extending from the vertex B, and a diagonal line Y₃ extending from the vertex C. Further, the recessed grooves X are arranged at positions corresponding to respective vertices of the vertices A and D being end points of the diagonal line Y₁, and at positions corresponding to respective vertices of the vertices B and E being end points of the diagonal line Y₂.

In FIG. 6(b), a second cross section 12 is a decagon having ten vertices from a vertex A to a vertex J along a circumferential direction. A first cross section 11 and the second cross section 12 share the vertices B, C, E, G, H, and J, and these vertices correspond to shared vertices. On the other hand, the first cross section 11 and the second cross section 12 do not share the vertices A, D, F, and I. The first cross section 11 includes four recessed grooves X so as to stride over the respective vertices A, D, F, and I. These recessed grooves X have vertices A', D', F', and I' at their bottoms, respectively. As illustrated in FIG. 6(b), the number of the shared vertices may be larger than the number of the recessed grooves X. Further, in the example illustrated in FIG. 6(b), there are five diagonal lines Y₁ to Y₅ as the longest diagonal lines, and the recessed grooves X are arranged at positions corresponding to respective vertices of the vertices A and F being end points of the diagonal line Y₁, and at positions corresponding to respective vertices of the vertices D and I being end points of the diagonal line Y₄.

In FIG. 6(c), a second cross section 12 is a hexagon having six vertices from a vertex A to a vertex F along a circumferential direction. A first cross section 11 and the second cross section 12 share the vertices A, C, and E, and these vertices correspond to shared vertices. On the other hand, the first cross section 11 and the second cross section 12 do not share the vertices B, D, and F. The first cross section 11 includes three recessed grooves X so as to stride over the respective vertices B, D, and F. These recessed grooves X have vertices B', D', and F' at their bottoms, respectively. As illustrated in FIG. 6(c), the number of the shared vertices may be the same as the number of the recessed grooves X.

Further, in FIG. 6(d), a second cross section 12 is a pentagon having five vertices from a vertex A to a vertex E along a circumferential direction. A first cross section 11 and the second cross section 12 share the vertices A and D, and these vertices correspond to shared vertices. On the other hand, the first cross section 11 and the second cross section 12 do not share the vertices B, C, and E. The first cross section 11 includes three recessed grooves X so as to stride over the respective vertices B, C, and E. These recessed grooves X have vertices B', D', and F' at their bottoms, respectively.

The definition of the first cross section 11, the second cross section 12, and the recessed groove X, and so on have been explained above while exemplifying the impact absorbing members 10 each having one inflection point in the recessed groove X. Next, an impact absorbing member 1 in the present disclosure having a plurality of inflection points in a recessed groove X will be explained. Note that the impact absorbing member 1 to be explained below has characteristics common to those of the above-described impact absorbing member 10, except that the number of the inflection points of the recessed groove X is plural. Accordingly, advantageous points of the impact absorbing member 10 with respect to the prior art, effects when employing the preferable embodiments, and so on described above are similarly exhibited also in the impact absorbing member 1 to be explained below. Further, in the impact absorbing member 1 in the present disclosure, the recessed groove X has a plurality of inflection points, so that the balance between impact absorbing performance and lightness in weight becomes better than that of the impact absorbing member 10 described above as the reference example.

### (Recessed groove having plurality of inflection points)

FIG. 7 is a schematic sectional view exemplifying an impact absorbing member in the present disclosure. In an impact absorbing member 1 illustrated in FIG. 7, a second cross section 12 is a hexagon having six vertices from a vertex A to a vertex F along a circumferential direction. A first cross section 11 and the second cross section 12 share the vertices A, C, D, and F, and these vertices correspond to shared vertices. On the other hand, the first cross section 11 and the second cross section 12 do not share the vertices B and E. The first cross section 11 includes recessed grooves X at positions corresponding to the non-shared vertices B and E, respectively.

The above-described recessed groove has a first inflection point 13 and a second inflection point 14. The "first inflection point" in the present disclosure indicates a vertex whose interior angle is greater than 180°, out of vertices at the bottom of the recessed groove X. On the other hand, the "second inflection point" in the present disclosure indicates a vertex whose interior angle is less than 180°, out of vertices at the bottom of the recessed groove X.

In the example illustrated in FIG. 7, there exist vertices B₁', B₂', and B₃', as inflection points of the recessed groove X corresponding to the vertex B, and among these vertices, the vertices B₁' and B₃' each having an interior angle of greater than 180°, correspond to the first inflection point 13. On the other hand, the vertex whose interior angle is less than 180° is the vertex B₂', and this vertex B₂' corresponds to the second inflection point 14. In the recessed groove X corresponding to the vertex B, the first inflection point 13 and the second inflection point 14 are alternately arranged along a circumferential direction of the first cross section 11.

Further, in the example illustrated in FIG. 7, there exist vertices E₁', E₂', and E₃', as inflection points of the recessed groove X corresponding to the vertex E, and among these vertices, the vertices E₁' and E₃' each having an interior angle of greater than 180°, correspond to the first inflection point 13. On the other hand, the vertex whose interior angle is less than 180° is the vertex E₂', and this vertex E₂' corresponds to the second inflection point 14. Also in the recessed groove X corresponding to the vertex E, the first inflection point 13 and the second inflection point 14 are alternately arranged along the circumferential direction of the first cross section 11.

According to the impact absorbing member 1 in the present disclosure, the recessed groove X has the first inflection point 13 and the second inflection point 14, and further, there are provided a plurality of the first inflection points 13. For this reason, when compared to a case where the number of the inflection point of the recessed groove is only one, it is possible to shorten the length of the side configuring the recessed groove, resulting in that surface rigidity in each side can be increased. Consequently, when a load is input in the impact absorbing member 1 in its axial direction, it becomes difficult to cause unstable buckling in the axial direction of the impact absorbing member 1, and continuous buckling in a bellows shape is likely to be caused from an end portion on the side to which the load in the axial direction is input. As a result of this, the impact absorbing performance can be improved.

Further, as will be described later in examples, the impact absorbing member 1 in the present disclosure can exhibit impact absorbing performance equal to or greater than that of an impact absorbing member whose recessed groove X has only one inflection point (first inflection point), even if the impact absorbing member 1 has weight equal to or less than that of the impact absorbing member. Specifically, when compared to the impact absorbing member whose recessed groove X has only one inflection point (first inflection point), the impact absorbing member 1 in the present disclosure has further excellent balance between the impact absorbing performance and the lightness in weight.

Besides, since the first inflection point 13 and the second inflection point 14 are alternately arranged in the circumferential direction of the first cross section 11, the symmetric property of the shape of the recessed groove X is enhanced, which improves the stability of buckling. Accordingly, regular axial crushing deformation is likely to occur in the impact absorbing member 1, which contributes to the improvement in the impact absorbing performance.

Further, in the impact absorbing member 1 illustrated in FIG. 7, there are three longest diagonal lines of the diagonal line Y₁ as the longest diagonal line extending from the vertex A, the diagonal line Y₂ as the longest diagonal line extending from the vertex B, and the diagonal line Y₃ as the longest diagonal line extending from the vertex C. Further, the recessed grooves X are arranged at the respective vertices of the vertices B and E being end points of the diagonal line Y₂. As already described while referring to FIG. 6(a) and FIG. 6(b), when at least two recessed grooves X are arranged at positions corresponding to respective vertices on the same longest diagonal line, the symmetric property of arrangement of the shared vertices and the recessed grooves is enhanced, which improves the stability of buckling. Specifically, the impact absorbing member 1 illustrated in FIG. 7 is likely to cause the regular axial crushing deformation, and thus is likely to improve the impact absorbing performance.

Note that the shape of the impact absorbing member 1 including the recessed grooves X having the plurality of inflection points 13 and 14, is not limited to the example illustrated in FIG. 7. FIGS. 8 are schematic sectional views each exemplifying an impact absorbing member in the present disclosure, and are examples of impact absorbing members excellent in the balance between the impact absorbing performance and the lightness in weight described above.

In an example illustrated in FIG. 8(a), a second cross section 12 is a hexagon having six vertices from a vertex A to a vertex F along a circumferential direction. Shared vertices of a first cross section 11 and the second cross section 12 are the vertices A, C, D, and F, and recessed grooves X are provided at positions corresponding to the vertices B and E being non-shared vertices, respectively.

Further, in the recessed groove X corresponding to the vertex B, there exist vertices B₁', B₂', B₃', and B₄' as inflection points, and among these vertices, the first inflection point 13 corresponds to the vertices B₁', B₃', and B₄', and the second inflection point 14 corresponds to the vertex B₂'. Further, in the recessed groove X corresponding to the vertex E, vertices E₁', E₃', and E₄' are provided as the first inflection point 13, and a vertex E₂' is provided as the second inflection point 14.

In this impact absorbing member 1, the first inflection point 13 (for example, the vertex B₁'), the second inflection point 14 (for example, the vertex B₂'), the first inflection point 13 (for example, the vertex B₃'), and the first inflection point 13 (for example, the vertex B₄') are arranged in order along the circumferential direction of the first cross section 11. Specifically, at the bottom of the recessed groove X, there exist a region in which the first inflection point 13 and the second inflection point 14 are alternately arranged (for example, a region from the vertex B₁' to the vertex B₃'), and a region in which a plurality of the first inflection points 13 are adjacent to each other (for example, a region from the vertex B₃' to the vertex B₄').

As described above, although there may be a region in which the first inflection point 13 and the second inflection point 14 are not alternately arranged along the circumferential direction of the first cross section 11, the first inflection point 13 and the second inflection point 14 are required to be alternately arranged in at least a part of region of the first cross section 11. When this is realized, the symmetric property of the shape of the recessed groove X is enhanced, and the stability of buckling can be improved.

In an example illustrated in FIG. 8(b), a second cross section 12 is a hexagon having six vertices from a vertex A to a vertex F along a circumferential direction. Shared vertices are the vertices C and F, and recessed grooves X are provided at positions corresponding to the vertices A, B, D, and E being non-shared vertices, respectively.

The recessed groove X corresponding to the vertex A has one first inflection point 13 (vertex A'), and the recessed groove X corresponding to the vertex D has one first inflection point 13 (vertex D'). Meanwhile, the recessed groove X corresponding to the vertex B has two first inflection points 13 (vertices B₁' and B₃'), and a second inflection point 14 (vertex B₂') provided between those first inflection points 13. In like manner, the recessed groove X corresponding to the vertex E has two first inflection points 13 (vertices E₁' and E₃'), and a second inflection point 14 (vertex E₂') provided between those first inflection points 13.

The impact absorbing member 1 illustrated in FIG. 8(b) is an example in which the recessed groove X having only one first inflection point 13 and the recessed groove X having the plurality of first inflection points 13 and the second inflection point 14 along the circumferential direction of the first cross section 11, are alternately arranged along the circumferential direction of the first cross section 11.

In an example illustrated in FIG. 8(c), a second cross section 12 is a quadrangle having four vertices from a vertex A to a vertex D along a circumferential direction. Shared vertices are the vertices B and D, and recessed grooves X are provided at positions corresponding to the vertices A and C being non-shared vertices, respectively.

The recessed groove X corresponding to the vertex A has each of two first inflection points 13 (vertices A₁' and A₃'), and a second inflection point 14 (vertex A₂') provided between those first inflection points 13. In like manner, the recessed groove X corresponding to the vertex C has two first inflection points 13 (vertices D₁' and D₃'), and a second inflection point 14 (vertex D₂') provided between those first inflection points 13. In each of the recessed grooves X, the first inflection point 13 and the second inflection point 14 are alternately arranged along the circumferential direction of the first cross section 11.

The above is the explanation regarding the impact absorbing members 1 in the present disclosure. Note that the number of inflection points when the recessed groove X has a plurality of inflection points, is appropriately set according to a size of cross section of the impact absorbing member 1.

Regarding the size of cross section, the recessed groove X having a plurality of inflection points is preferably applied to the impact absorbing member 1 in which a ratio between a height d₁ and a width d₂ (referred to as a "width-height ratio", hereinafter) of the first cross section 11 exemplified in FIG. 7 to FIGS. 9 is 0.70 or less. Hereinafter, a definition of the width-height ratio of the first cross section 11 will be explained.

The "height d₁ of the first cross section" in the present disclosure indicates an interval between two sides having the largest interval out of two sides parallel to each other in the second cross section 12. In the example illustrated in FIG. 7, two sides whose interval therebetween is the largest out of intervals of two sides parallel to each other in the second cross section 12, are the side FA and the side CD, and thus the interval between the side FA and the side CD is the height d₁ of the first cross section 11.

Further, the "width d₂ of the first cross section" in the present disclosure indicates a maximum length of the first cross section 11 in a direction perpendicular to a direction of the height d₁ (height direction) of the first cross section 11. In the example illustrated in FIG. 7, the direction perpendicular to the direction of the height d₁ of the first cross section 11 is a lateral direction of the paper sheet of FIG. 7, and the maximum length in this direction is a length between the vertices B₂' and E₂' of the recessed grooves X. Therefore, the length between the vertices B₂' and E₂' is the width d₂ of the first cross section 11.

Further, a value calculated by the width d₂ of the first cross section 11 / the height d₁ of the first cross section 11, is the "width-height ratio of the first cross section 11". When this width-height ratio (d₂/d₁) is 0.70 or less, stable buckling is likely to occur in the impact absorbing member 1, which enables to improve the stability of deformation behavior, as will be described later in examples. The width-height ratio is preferably 0.65 or less, more preferably 0.60 or less, and still more preferably 0.55 or less.

Note that the height d₁ and the width d₂ of the first cross section in the impact absorbing member 1 illustrated in each of FIGS. 8 are as follows.

The height d₁ of the first cross section 11 in FIG. 8(a) is an interval between the side FA and the side DC, and the width d₂ of the first cross section 11 is a length between the vertices K and J. Note that in the example illustrated in FIG. 8(a), the length between the vertices K and J and a length between the vertices L and I are equal, so that the width d₂ of the first cross section 11 may also be set to the length between the vertices L and I.

The height d₁ of the first cross section 11 in FIG. 8(b) is an interval between the side FA and the side DC, and the width d₂ of the first cross section 11 is a length in a direction perpendicular to a direction of the height d₁ of the first cross section 11, at a position of the vertex K (a length of a two-dot chain line in the drawing). Note that also in the example illustrated in FIG. 8(b), there are a plurality of locations each having a width same as the width d₂ of the first cross section 11, but the width at the position of the vertex K, as a representative thereof, is set to the width d₂ of the first cross section 11.

The height d₁ of the first cross section 11 in FIG. 8(c) is an interval between the side DA and the side CB, and the width d₂ of the first cross section 11 is a length in a direction perpendicular to a direction of the height d₁ of the first cross section 11, at a position of the vertex C₂' (a length of a two-dot chain line in the drawing). Note that in the example illustrated in FIG. 8(c), there is another location having a width same as the width d₂ of the first cross section 11, but the width at the position of the vertex C₂', as a representative thereof, is set to the width d₂ of the first cross section 11.

The above is the explanation regarding the width-height ratio (d₂/d₁) of the impact absorbing member 1 in the present disclosure.

Note that depending on a shape of the second cross section 12, there is a case where an interval between two sides that are parallel to each other and an interval between the other two sides different from those two sides become equal to each other, and thus there are a plurality of combinations of two sides capable of being defined as the height d₁ of the first cross section 11. In this case, the definition in the width direction becomes different depending on the combination of two sides employed as the height d₁ of the first cross section 11, so that there also exist a plurality of lengths of the width d₂ of the first cross section 11. Specifically, there is a case where a plurality of width-height ratios can be defined with respect to one impact absorbing member. In such a case, a minimum width-height ratio out of the plurality of width-height ratios is employed as the width-height ratio in the present disclosure.

As a material of the impact absorbing member in the present disclosure explained above, there can be cited metal such as steel or an aluminum alloy, for example. Further, tensile strength of the above metal is preferably 780 MPa or more, for example. The tensile strength is more preferably 980 MPa or more, and still more preferably 1180 MPa or more. Note that the "metal" in the present disclosure does not include a foam metal in which a base metal includes a large number of pores.

Further, although a sheet thickness of the impact absorbing member is not limited in particular, it is 0.5 mm or more and 5 mm or less, for example, and it may also be 0.5 mm or more and 1.6 mm or less. The material of 780 MPa or more is advantageous in terms of impact absorbing performance, but there is room for improvement in terms of suppressing the reduction in stability of deformation. It has been found out that the stability of deformation is changed due to bending deformation, and regarding a strain amount generated by bending deformation at the same curvature radius, the thinner the sheet thickness is, the more advantageous it is. Based on this point of view, the sheet thickness of the impact absorbing member is preferably 1.6 mm or less.

Further, although the impact absorbing member can be used for arbitrary purposes for absorbing an impact through crushing in the axial direction, there can be cited a crash box for an automobile, as a typical application thereof.

Although a manufacturing method of the impact absorbing member in the present disclosure is not limited in particular, there can be cited, for example, a method of applying, to a raw material having a cylindrical shape, any one or a plurality of pieces of processing such as extrusion, hydroforming (liquid seal forming), and roll forming. As another example of the manufacturing method of the impact absorbing member, there can be cited a method of applying, to a steel sheet, any one or a plurality of pieces of processing such as press bending, drawing, winding, and roll forming, to thereby form a cylindrical shape having a first cross section.

In order to make the cylindrical shape into a closed cross section, joining may be performed appropriately. As joining methods, there can be cited, for example, intermittent joining such as spot welding, caulking, and spot friction stir welding, and continuous joining such as arc (plasma) welding, laser welding, and friction stir welding.

The present disclosure is not limited to the above-described embodiments. The above-described embodiments are provided as examples, and any embodiment shall be included in the technical scope in the present disclosure, provided that such an embodiment has a configuration that is substantially the same as the technical ideas described in claims in the present disclosure, and that the embodiment brings about similar operations and effects.

### EXAMPLES

In the explanation below, evaluations regarding reference examples in each of which each recessed groove has one bottom vertex (first inflection point), and comparative examples will be conducted before explaining examples of the impact absorbing member in the present disclosure.

### [Reference example 1]

A FEM analysis was performed to evaluate buckling deformation behavior. In a reference example 1, buckling deformation behavior was evaluated in an impact absorbing member having a first cross section illustrated in FIG. 9(a). In the first cross section illustrated in FIG. 9(a), as a width Wp of a planar portion P extending in the axial direction (a side configuring the first cross section), Wp₁ (11 mm) and Wp₂ (9 mm) were set. Note that although not illustrated, a second cross section in the impact absorbing member illustrated in FIG. 9(a) is an octagon, in a similar manner to FIG. 2. Further, all interior angles (ridge line angles) of less than 180° in the first cross section were set to θ₁ = 120°, and besides, all angles (ridge line angles) of bottom vertices of four recessed grooves were set to θ₂ = 90°. Further, a curvature radius of ridge line was set to 5 mm, and a length in the axial direction of the impact absorbing member (member length) was set to 200 mm. For the FEM analysis, a material property of a 1180 MPa-class steel sheet with a sheet thickness of 1.0 mm was used, strain rate dependence was taken into account based on the Cowper-Symonds model, and a deformation rate (collision rate) at a time of buckling deformation was set to 5 m/s.

### [Comparative example 1]

In a comparative example 1, buckling deformation behavior was evaluated in an impact absorbing member having a first cross section illustrated in FIG. 9(b). In the first cross section illustrated in FIG. 9(b), as a width Wp of a planar portion P extending in the axial direction, Wp₁ (10 mm), Wp₂ (12 mm), and Wp₃ (8 mm) were set. Further, all interior angles (ridge line angles) of less than 180° in the first cross section were set to θ₁ = 90°, and besides, all angles (ridge line angles) of bottom vertices of four recessed grooves were also set to θ₁ = 90°. The other conditions were set in a similar manner to the reference example 1.

### [Comparative example 2]

In a comparative example 2, buckling deformation behavior was evaluated in an impact absorbing member having a first cross section illustrated in FIG. 9(c). In the first cross section illustrated in FIG. 9(c), as a width Wp of a planar portion P extending in the axial direction, Wp₁ (12 mm), Wp₂ (8 mm), Wp₃ (9 mm), and Wp₄ (12 mm) were set. Further, all interior angles (ridge line angles) of less than 180° in the first cross section were set to θ₁ = 90°, and besides, all angles (ridge line angles) of bottom vertices of four recessed grooves were also set to θ₁ = 90°. The other conditions were set in a similar manner to the reference example 1. The set conditions of the reference example 1 and the comparative examples 1 and 2 are shown in Table 1.

**[Table 1]**

| | | REFERENCE EXAMPLE 1 | COMPARATIVE EXAMPLE 1 | COMPARATIVE EXAMPLE 2 |
|---|---|---|---|---|
| RIDGE LINE ANGLE | *θ*₁ | 120 deg. | 90 deg. | 90 deg. |
| | *θ*₂ | 90 deg. | - | - |
| WIDTH OF PLANAR PORTION | Wp₁ | 11 mm | 10 mm | 12 mm |
| | Wp₂ | 9 mm | 12 mm | 8 mm |
| | Wp₃ | - | 8 mm | 9 mm |
| | Wp₄ | - | - | 12 mm |
| CURVATURE RADIUS OF RIDGE LINE | | 5 mm | | |
| SHEET THICKNESS | | 1.0 mm | | |
| MATERIAL | | 1180 MPa-CLASS | | |
| MEMBER LENGTH | | 200 mm | | |
| COLLISION RATE | | 5 m/s | | |

### [Evaluation]

Results of the FEM analysis in the reference example 1 and the comparative examples 1 and 2 are shown in FIG. 10. In FIG. 10, a horizontal axis of a graph indicates a loading point displacement δ [mm], and a vertical axis of the graph indicates a load F/Lt [kN/mm²] per unit cross-sectional area, obtained by dividing a load F by a cross-sectional area Lt of the member. As illustrated in FIG. 10, in the reference example 1, the load level was confirmed to be higher than that of the comparative examples 1 and 2 over the entire crushing stroke. Concretely, Fₐᵥₑ/Lt [kN/mm²] being an average of load under the displacement of 0 mm to 125 mm was 0.53 kN/mm² in the reference example 1, it was 0.44 kN/mm² in the comparative example 1, and it was 0.46 kN/mm² in the comparative example 2. Specifically, the reference example 1 was superior to the comparative examples 1 and 2 in terms of the balance between the impact absorbing performance and the lightness in weight (impact absorbing performance per weight).

### [Reference examples 2 and 3]

The FEM analysis was performed to evaluate buckling deformation behavior. In reference examples 2 and 3, the buckling deformation behavior was evaluated in the impact absorbing member having the first cross section illustrated in FIG. 9(a), in a similar manner to the reference example 1. The set conditions of the reference examples 2 and 3 are shown in Table 2.

**[Table 2]**

| | | REFERENCE EXAMPLE 2 | REFERENCE EXAMPLE 3 |
|---|---|---|---|
| RIDGE LINE ANGLE | *θ*₁ | 105, 110, 115, 120, 125, 130, 135 deg. | |
| | *θ*₂=90-(360-3*θ*₁) | 45, 60, 75, 90, 105, 120, 135 deg. | |
| WIDTH OF PLANAR PORTION | Wp₁ | 11 mm | 16 mm |
| | Wp₂ | 9 mm | **14** mm |
| CURVATURE RADIUS OF RIDGE LINE | | 5 mm | |
| SHEET THICKNESS | | 1.0 mm | |
| MATERIAL | | **1180 MPa-CLASS** | |
| MEMBER LENGTH | | 200 mm | |
| COLLISION RATE | | 5 m/s | |

### [Evaluation]

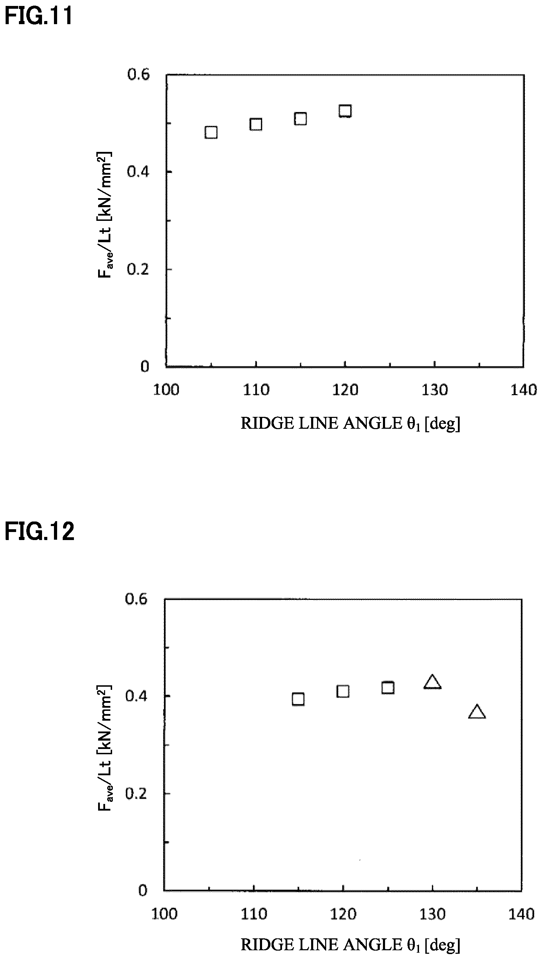

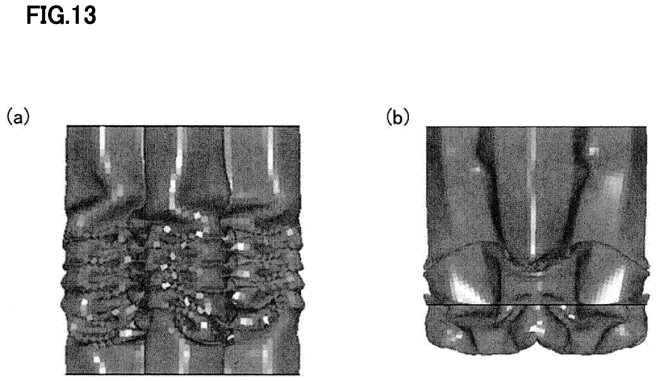

Results of the FEM analysis in the reference example 2 are shown in FIG. 11, and results of the FEM analysis in the reference example 3 are shown in FIG. 12. As illustrated in FIG. 11 and FIG. 12, the larger the ridge line angle θ₁ became, the better the value of Fₐᵥₑ/Lt was, until when the ridge line angle θ₁ became 130°. Meanwhile, as illustrated in FIG. 12, when the ridge line angle θ₁ was 135°, the value of Fₐᵥₑ/Lt became slightly small. Here, a quadrangular plot illustrated in FIG. 11 and FIG. 12 indicates a deformation mode (Type I) in which the buckling proceeded stably, as illustrated in FIG. 13(a). On the other hand, a triangular plot illustrated in FIG. 12 indicates a deformation mode (Unstable) in which the buckling proceeded unstably, as illustrated in FIG. 13(b). As illustrated in FIG. 12, when the ridge line angle θ₁ is 130°, the deformation mode becomes Unstable, but the value of Fₐᵥₑ/Lt becomes the highest, and thus it is indicated that the ridge line angle θ₁ is preferably 130° or less in particular.

### [Reference example 4]

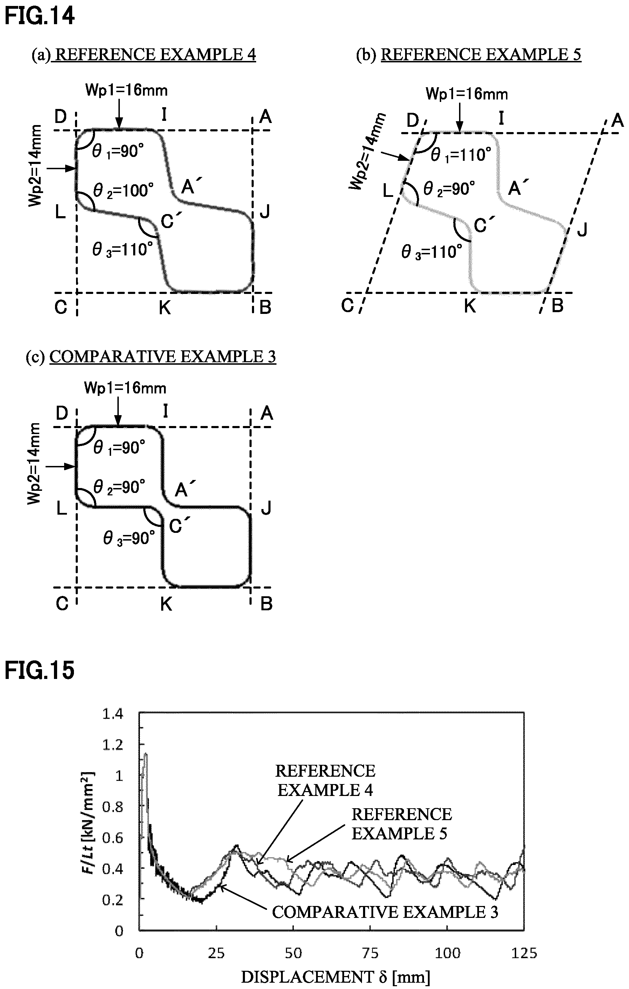

In a reference example 4, buckling deformation behavior was evaluated in an impact absorbing member having a first cross section (solid line portion) illustrated in FIG. 14(a). In the first cross section illustrated in FIG. 14(a), as a width Wp of a planar portion P, Wp₁ (16 mm) and Wp₂ (14 mm) were set. A second cross section is a quadrangle. Further, all interior angles (ridge line angles) of shared vertices B and D in the first cross section were set to θ₁ = 90°, all interior angles (ridge line angles) of boundary vertices I, J, K, and L were set to θ₂ = 100°, and all exterior angles (ridge line angles) of bottom vertices A' and C' were set to θ₃ = 110°. The other conditions were set in a similar manner to the reference example 1.

### [Reference example 5]

In a reference example 5, buckling deformation behavior was evaluated in an impact absorbing member having a first cross section (solid line portion) illustrated in FIG. 14(b). In the first cross section illustrated in FIG. 14(b), as a width Wp of a planar portion P, Wp₁ (16 mm) and Wp₂ (14 mm) were set. A second cross section is a quadrangle. Further, all interior angles (ridge line angles) of shared vertices B and D in the first cross section were set to θ₁ = 110°, all interior angles (ridge line angles) of boundary vertices I, J, K, and L were set to θ₂ = 90°, and all exterior angles (ridge line angles) of bottom vertices A' and C' were set to θ₃ = 110°. The other conditions were set in a similar manner to the reference example 1.

### [Comparative example 3]

In a comparative example 3, buckling deformation behavior was evaluated in an impact absorbing member having a first cross section (solid line portion) illustrated in FIG. 14(c). In the first cross section illustrated in FIG. 14(c), as a width Wp of a planar portion P, Wp₁ (16 mm) and Wp₂ (14 mm) were set. A second cross section is a quadrangle. Further, all interior angles (ridge line angles) of shared vertices B and D in the first cross section, all interior angles (ridge line angles) of boundary vertices I, J, K, and L, and all exterior angles (ridge line angles) of bottom vertices A' and C' were set to 110°. The other conditions were set in a similar manner to the reference example 1. The set conditions of the reference examples 4 and 5, and the comparative example 3 are shown in Table 1.

**[Table 3]**

| | | REFERENCE EXAMPLE 4 | REFERENCE EXAMPLE 5 | COMPARATIVE EXAMPLE3 |
|---|---|---|---|---|
| RIDGE LINE ANGLE | θ₁ | 90 deg. | 110 deg. | 90 deg. |
| | θ₂ | 100 deg. | 90 deg. | 90 deg. |
| | θ₃ | 110 deg. | 110 deg. | 90 deg. |
| WIDTH OF PLANAR PORTION | Wp₁ | 16 mm | | |
| | Wp₂ | 14 mm | | |
| CURVATURE RADIUS OF RIDGE LINE | | 5 mm | | |
| SHEET THICKNESS | | 1.0 mm | | |
| MATERIAL | | 1180 MPa-CLASS | | |
| MEMBER LENGTH | | 200 mm | | |
| COLLISION RATE | | 5 m/s | | |

### [Evaluation]

Results of the FEM analysis in the reference examples 4 and 5, and the comparative example 3 are shown in FIG. 15. As illustrated in FIG. 15, in the reference examples 4 and 5, the load level was confirmed to be higher than that of the comparative example 3 over the entire crushing stroke. Concretely, when attention is focused on Fₐᵥₑ/Lt [kN/mm²] being an average of load under the displacement of 0 mm to 125 mm, Fₐᵥₑ/Lt of each of the reference examples 4 and 5 was further improved by about 10% than that of the comparative example 3. Specifically, the reference examples 4 and 5 were superior to the comparative example 3 in terms of the balance between the impact absorbing performance and the lightness in weight (impact absorbing performance per weight).

The above is the explanation regarding the superiority of the reference examples by comparing the reference examples of the impact absorbing member having one bottom vertex (first inflection point) in each recessed groove, and the comparative examples. Subsequently, evaluations regarding examples of an impact absorbing member having a plurality of first inflection points and a second inflection point in a recessed groove will be conducted. Note that the examples and the above-described reference examples are different in the number of inflection point in the recessed groove, but are common in a point that both have the recessed groove, and thus the above-described priority of the reference examples over the comparative examples is exhibited also in the examples.

### [Example 1]

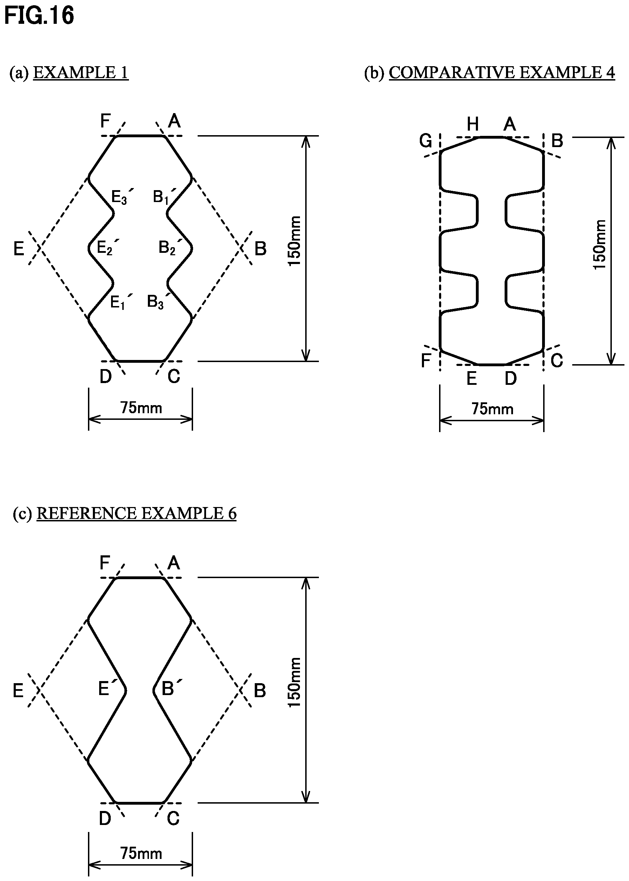

In an example 1, buckling deformation behavior was evaluated in an impact absorbing member having a first cross section (solid line portion) illustrated in FIG. 16(a). The impact absorbing member illustrated in FIG. 16(a) has vertices A, C, D, and F as shared vertices, and has recessed grooves at positions corresponding to non-shared vertices B and E, respectively. Each recessed groove is provided with two first inflection points, and a second inflection point arranged between those first inflection points.

### [Comparative example 4]

In a comparative example 4, buckling deformation behavior was evaluated in an impact absorbing member having a first cross section (solid line portion) illustrated in FIG. 16(b). The impact absorbing member illustrated in FIG. 16(b) has vertices A, B, C, D, E, F, G, and H as shared vertices, but has no non-shared vertex. Although recessed grooves are provided to a side BC and a side FG, they are not recessed grooves provided at positions corresponding to non-shared vertices, and thus the comparative example 4 corresponds to the impact absorbing member that does not have the recessed groove defined by the present disclosure.

### [Reference example 6]

In a reference example 6, buckling deformation behavior was evaluated in an impact absorbing member having a first cross section (solid line portion) illustrated in FIG. 16(c). The impact absorbing member illustrated in FIG. 16(c) has vertices A, C, D, and F as shared vertices, and has recessed grooves at positions corresponding to non-shared vertices B and E, respectively. Each recessed groove is provided with one bottom vertex (first inflection point).

The other set conditions of the FEM analysis and analysis results are shown in Table 4. Note that "Fₐᵥₑ/Lt ratio" in Table 4 indicates a ratio of Fₐᵥₑ/Lt of the impact absorbing member of each of the examples to Fₐᵥₑ/Lt of the impact absorbing member of the reference example 6. Specifically, when the Fₐᵥₑ/Lt ratio exceeds 1, this means that the balance between the impact absorbing performance and the lightness in weight is superior to that of the reference example 6.

**[Table 4]**

| | EXAMPLE 1 | COMPARATIVE EXAMPLE 4 | REFERENCE EXAMPLE 6 |
|---|---|---|---|
| WIDTH d₂ | 75 mm | 75 mm | 75 mm |
| HEIGHT d₁ | 150 mm | 150 mm | 150 mm |
| WIDTH-HEIGHT RATIO (d₂/d₁) | 0.50 | 0.50 | 0.50 |
| Fₐᵥₑ/Lt RATIO (RATIO WITH RESPECT TO REFERENCE EXAMPLE 6) | 1.12 | 0.97 | 1.00 |
| MATERIAL | 1180 MPa-CLASS | | |
| MEMBER LENGTH | 150 mm | | |
| COLLISION RATE | 5 m/s | | |

### [Evaluation]

As shown in Table 4, the Fₐᵥₑ/Lt ratio of the impact absorbing member of the example 1 was further improved than that of the impact absorbing members of the comparative example 4 and the reference example 6. Specifically, the impact absorbing member including the recessed grooves each having the plurality of first inflection points and the second inflection point between those first inflection points, is superior to the comparative example 4 and the reference example 6 in terms of the balance between the impact absorbing performance and the lightness in weight.

Next, models of impact absorbing members in an example 2 and an example 3 below were used to perform a FEM analysis similar to that of the above-described example 1, thereby evaluating buckling deformation behavior.

### [Example 2]

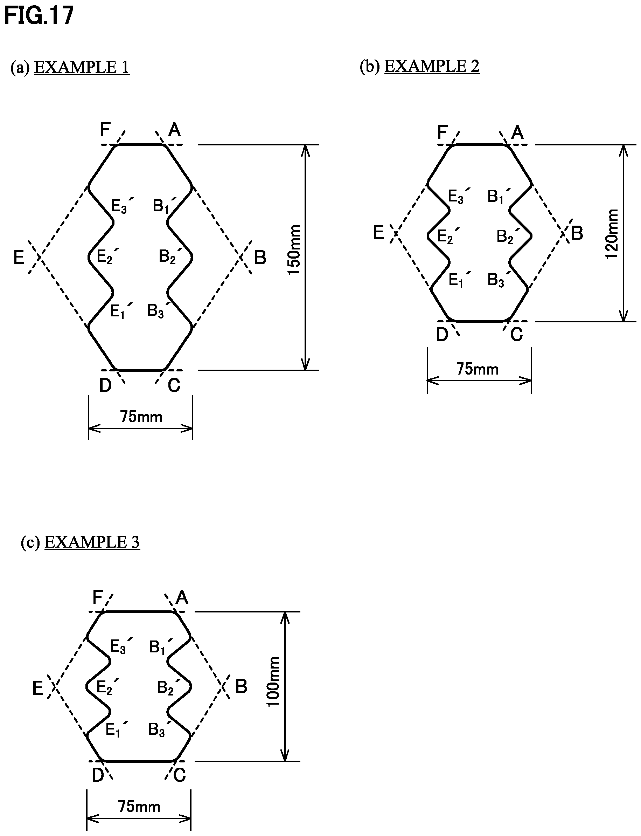

In the example 2, buckling deformation behavior was evaluated in an impact absorbing member having a first cross section (solid line portion) illustrated in FIG. 17(b). The impact absorbing member illustrated in FIG. 17(b) is a model in which a height of the first cross section is lower than that of the impact absorbing member of the example 1 illustrated in FIG. 17(a).

### [Example 3]

In the example 3, buckling deformation behavior was evaluated in an impact absorbing member having a first cross section (solid line portion) illustrated in FIG. 17(c). The impact absorbing member illustrated in FIG. 17(c) is a model in which a height of the first cross section is still lower than that of the impact absorbing member of the example 2 illustrated in FIG. 17(b).

The other set conditions of the FEM analysis and analysis results are shown in Table 5. Note that "Fₐᵥₑ/Lt ratio" in Table 5 indicates the above-described ratio of Fₐᵥₑ/Lt of the impact absorbing member of each of the examples to Fₐᵥₑ/Lt of the impact absorbing member of the reference example 6. Specifically, when the Fₐᵥₑ/Lt ratio exceeds 1, this means that the balance between the impact absorbing performance and the lightness in weight is superior to that of the reference example 6.

**[Table 5]**

| | EXAMPLE 1 | EXAMPLE 2 | EXAMPLE 3 |
|---|---|---|---|
| WIDTH d₂ | 75 mm | 75 mm | 75 mm |
| HEIGHT d₁ | 150 mm | 120 mm | 100 mm |
| WIDTH-HEIGHT RATIO (d₂/d₁) | 0.50 | 0.625 | 0.75 |
| Fₐᵥₑ/Lt RATIO (RATIO WITH RESPECT TO REFERENCE EXAMPLE 6) | 1.12 | 1.33 | 1.36 |
| MATERIAL | 1180 MPa-CLASS | | |
| MEMBER LENGTH | 150 mm | | |
| COLLISION RATE | 5 m/s | | |

### [Evaluation]

As shown in Table 5, each of the Fₐᵥₑ/Lt ratios of the examples 1 to 3 exceeds 1. Specifically, it can be confirmed that the impact absorbing member including the recessed groove having the plurality of first inflection points and the second inflection point between those first inflection points, is superior to the reference example 6 in terms of the balance between the impact absorbing performance and the lightness in weight.

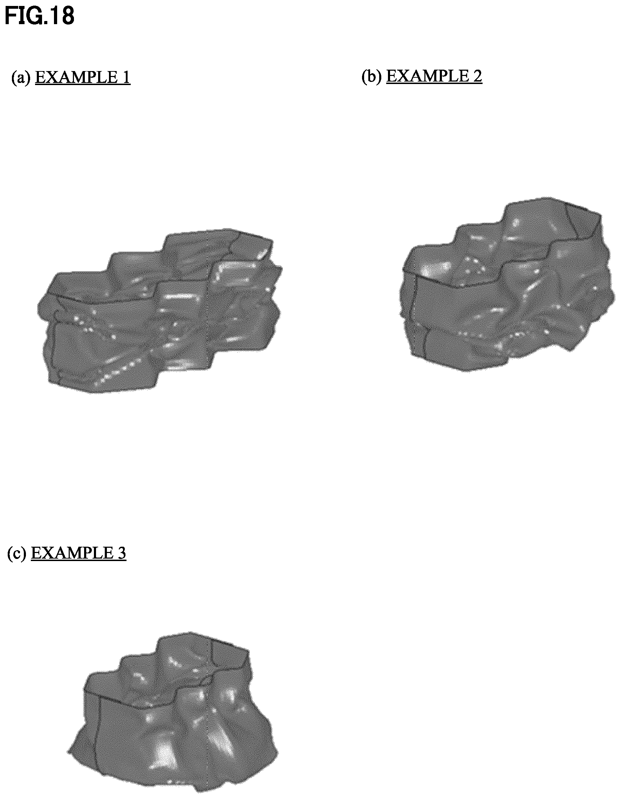

FIGS. 18 are perspective views illustrating deformation behavior of the impact absorbing members in the examples 1 to 3. As illustrated in FIGS. 18, a deformation mode in which the buckling proceeds stably was obtained in the examples 1 and 2, but in the example 3, a deformation mode (Unstable) in which the buckling proceeds unstably was obtained. According to the above-described Table 5, the width-height ratio of each of the examples 1 and 2 is smaller than the width-height ratio of the example 3, and thus from a viewpoint of improving the stability of the deformation behavior, the width-height ratio of the first cross section is preferably 0.70 or less.

Next, a model of an impact absorbing member in a comparative example 5 below was used to perform a FEM analysis similar to that of the above-described example 1, thereby evaluating buckling deformation behavior.

### [Comparative example 5]

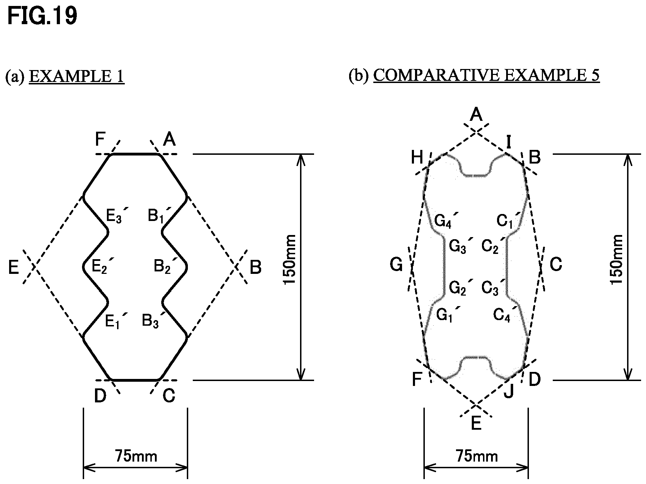

In a comparative example 5, buckling deformation behavior was evaluated in an impact absorbing member having a first cross section (solid line portion) illustrated in FIG. 19(b). The impact absorbing member of the comparative example 5 has vertices B, D, F, and H as shared vertices, and has recessed grooves at positions corresponding to non-shared vertices A, C, E, and G, respectively.

Each recessed groove is provided with two first inflection points and two second inflection points, and in each recessed groove, the second inflection point, the first inflection point, the other first inflection point, and the other second inflection point are arranged in this order along a circumferential direction of the first cross section. For example, in the recessed groove at the position corresponding to the non-shared vertex C, a vertex C₁' as the second inflection point, a vertex C₂' as the first inflection point, a vertex C₃' as the other first inflection point, and C₄' as the other second inflection point, are arranged in this order. Further, in the recessed groove at the position corresponding to the non-shared vertex G, a vertex G₁' as the second inflection point, a vertex G₂' as the first inflection point, a vertex G₃' as the other first inflection point, and G₄' as the other second inflection point, are arranged in this order. Note that in FIG. 19(b), the codes (C₁' to C₄', and G₁' to G₄') are given to only the inflection points of the recessed grooves corresponding to the non-shared vertices C and G, but also in the recessed grooves corresponding to the non-shared vertices A and E, there exist inflection points similar to those of the recessed grooves corresponding to the non-shared vertices C and G.

The other set conditions of the FEM analysis and analysis results are shown in Table 6. Note that "weight ratio" in Table 6 indicates a ratio of weight of the impact absorbing member of each of the examples to weight of the impact absorbing member of the comparative example 5. Specifically, when the weight ratio is less than 1, this means that the weight is lighter than that of the impact absorbing member of the comparative example 5. Further, "energy absorption ratio" in Table 6 indicates a ratio of energy absorption amount of the impact absorbing member of each of the examples to an energy absorption amount of the impact absorbing member of the comparative example 5. Specifically, when the energy absorption amount ratio exceeds 1, this means that the energy absorption amount is larger than that of the impact absorbing member of the comparative example 5, and thus the impact absorbing performance is superior to that of the impact absorbing member of the comparative example 5.

**[Table 6]**

| | EXAMPLE 1 | COMPARATIVE EXAMPLE 5 |
|---|---|---|
| WIDTH d₂ | 75 mm | 75 mm |
| HEIGHT d₁ | 150 mm | 150mm |
| WIDTH-HEIGHT RATIO (d₂/d₁) | 0.50 | 0.50 |
| WEIGHT RATIO (RATIO WITH RESPECT TO COMPARATIVE EXAMPLE 5) | 0.96 | 1 |
| ENERGY ABSORPTION AMOUNT RATIO (RATIO WITH RESPECT TO COMPARATIVE EXAMPLE 5) | 1.05 | 1 |
| MATERIAL | 1180 MPa-CLASS | |
| MEMBER LENGTH | 150 mm | |
| COLLISION RATE | 5 m/s | |

### [Evaluation]

As shown in Table 6, the weight ratio of the example 1 is less than 1. Accordingly, the weight of the impact absorbing member of the example 1 is lighter than that of the impact absorbing member of the comparative example 5. Further, the energy absorption amount ratio of the example 1 exceeds 1. Accordingly, the impact absorbing member of the example 1 is superior to the impact absorbing member of the comparative example 5 in terms of the impact absorbing performance. Specifically, the impact absorbing performance of the impact absorbing member of the example 1 is improved regardless of the fact that the member is lighter in weight than the impact absorbing member of the comparative example 5, and thus the impact absorbing member of the example 1 is excellent in the balance between the impact absorbing performance and the lightness in weight.

In particular, the impact absorbing member of the comparative example 5 can be considered to have a shape advantageous for the impact absorbing performance since it has four recessed grooves whose number is larger than that of the recessed grooves of the impact absorbing member of the example 1, but as the analysis results, the impact absorbing member of the example 1 was superior to the impact absorbing member of the comparative example 5 in terms of the impact absorbing performance. As the reasons of such results, it can be assumed that although the two first inflection points of each recessed groove (for example, C₂' and C₃') are arranged in an adjacent manner in the comparative example 5, in the example 1, the first inflection point and the second inflection point are alternately arranged, which improves the surface rigidity of each planar portion configuring the recessed groove.

The above is the explanation regarding the impact absorbing members according to the present disclosure. Although the plurality of configurations of the impact absorbing member have been exemplified in the present disclosure, the configurations of the respective impact absorbing members can be combined in an arbitrary manner within a range that does not impair the functions as the impact absorbing members.

For example, configurations as follows also belong to the technical scope of the present disclosure.
(1) An impact absorbing member that absorbs an impact by being crushed in an axial direction, the impact absorbing member having a cylindrical shape including a plurality of planar portions, extending along the axial direction, in which when a cross section perpendicular to the axial direction of the impact absorbing member is set to a first cross section, and a cross section defined by extension lines of a plurality of sides in the first cross section is set to a second cross section, the second cross section is a polygon having no interior angle of 180° or more, the first cross section includes a shared vertex that is shared by the second cross section, and a recessed groove that is positioned to correspond to a vertex of the second cross section, the recessed groove has a first inflection point being a vertex whose interior angle is greater than 180°, and a second inflection point being a vertex whose interior angle is less than 180°, a plurality of the first inflection points are provided, the first inflection point and the second inflection point are alternately arranged along a circumferential direction of the first cross section in at least a part of region of the first cross section, an interior angle of at least one vertex of the first cross section excluding the first inflection point and the second inflection point is 100° or more, and the first cross section does not have a partition wall portion in the inside thereof.
(2) In the impact absorbing member described in (1), a width-height ratio of the first cross section is 0.70 or less.
(3) In the impact absorbing member described in (1) or (2), the first cross section includes a plurality of the shared vertices and the recessed grooves, at least two of the recessed grooves are arranged at positions corresponding to respective vertices on the same diagonal line in the second cross section, and the diagonal line is the longest diagonal line out of a plurality of diagonal lines extending from one vertex.
(4) In the impact absorbing member described in any one of (1) to (3), the first cross section includes a plurality of the shared vertices and the recessed grooves, and the shared vertex and the recessed groove are alternately arranged along the circumferential direction of the first cross section.
(5) In the impact absorbing member described in any one of (1) to (4), each interior angle of less than 180° in the first cross section is 75° or more and 135° or less, and each angle of an exterior angle of the first inflection point in the first cross section is 75° or more and 135° or less.

### EXPLANATION OF CODES

- 10: impact absorbing member
- 11: first cross section
- 12: second cross section
- 13: first inflection point
- 14: second inflection point
- X: recessed groove

## Claims

1. An impact absorbing member that absorbs an impact by being crushed in an axial direction, the impact absorbing member comprising a cylindrical shape including a plurality of planar portions, extending along the axial direction, wherein:
when a cross section perpendicular to the axial direction of the impact absorbing member is set to a first cross section, and
a cross section defined by extension lines of a plurality of sides in the first cross section is set to a second cross section,
the second cross section is a polygon having no interior angle of 180° or more;
the first cross section includes a shared vertex that is shared by the second cross section, and a recessed groove that is positioned to correspond to a vertex of the second cross section;
the recessed groove has:
a first inflection point being a vertex whose interior angle is greater than 180°; and
a second inflection point being a vertex whose interior angle is less than 180°;
a plurality of the first inflection points are provided;
the first inflection point and the second inflection point are alternately arranged along a circumferential direction of the first cross section in at least a part of region of the first cross section;
an interior angle of at least one vertex of the first cross section excluding the first inflection point and the second inflection point is 100° or more; and
the first cross section does not have a partition wall portion in the inside thereof.

2. The impact absorbing member according to claim 1, wherein
a width-height ratio of the first cross section is 0.70 or less.

3. The impact absorbing member according to claim 1 or 2, wherein:
the first cross section includes a plurality of the shared vertices and the recessed grooves;
at least two of the recessed grooves are arranged at positions corresponding to respective vertices on the same diagonal line in the second cross section; and
the diagonal line is the longest diagonal line out of a plurality of diagonal lines extending from one vertex.

4. The impact absorbing member according to claim 1 or 2, wherein:
the first cross section includes a plurality of the shared vertices and the recessed grooves; and
the shared vertex and the recessed groove are alternately arranged along the circumferential direction of the first cross section.

5. The impact absorbing member according to claim 1 or 2, wherein:
each interior angle of less than 180° in the first cross section is 75° or more and 135° or less; and
each angle of an exterior angle of the first inflection point in the first cross section is 75° or more and 135° or less.
